# EUROPEAN PATENT SPECIFICATION

(11) **EP 1 910 231 B1**
(45) Date of publication and mention of the grant of the patent: **04.03.2015**
(21) Application number: 06771616.7
(22) Date of filing: 30.05.2006
(51) Int. Cl.: E21B 21/06, C02F 1/48

(54) **METAL DEBRIS CLEANOUT SYSTEM AND METHOD**
METALLABFALLREINIGUNGSSYSTEM UND -VERFAHREN
SYSTEME ET PROCEDE DE NETTOYAGE DE DEBRIS METALLIQUES

(30) Priority: 24.06.2005 US 166312
(43) Date of publication of application: 16.04.2008
(73) Proprietor: Rattler Tools, Inc., Harvey, LA 70058 (US); Ruttley, David J., Marrero, LA 70072 (US)
(72) Inventor: RUTTLEY, David J., LA 70072 (US)
(74) Representative: Wagner, Karl H.
(86) International application number: PCT/US2006/020945
(87) International publication number: WO 2007/001729

(56) References cited:
- US-A- 2 792 115
- US-A- 2 912 106
- US-A- 4 299 700
- US-A- 5 043 063
- US-A- 5 819 949
- US-A1- 2002 144 545
- US-A1- 2003 183 580
- US-B1- 6 264 842
- US-B2- 6 702 940

## Description

### BACKGROUND OF THE INVENTION

The present invention relates to a system and method for removal of metal debris from a normal path of a fluid flow, such as the flow of re-circulated fluid generated during drilling/completion operations.

The drilling or completion operation results in metal debris generated in the well bore. The debris is suspended in the highly viscous drilling fluid or other re-circulated fluid and must be periodically removed from the well bore in order to improve the well production and avoid damage to equipment operating within the well bore, such as pumps and the like. The drilling fluid carries with it pieces of metallic shavings that are particularly dangerous for the operation of equipment during completion and production operations.

Conventionally, the drilling fluid is pumped to the surface, cleaned and recirculated back into the well bore. Shale shakers and similar equipment is often used to remove chunks of formation, metal pieces and other such objects. The drilling fluid is then delivered to a mud pit, flowing along a ditch, which may be 100 feet long. The mud pit allows the smaller particles to settle on the bottom, while the drilling fluid, now relatively free of debris, is pumped back to the rig floor by pumps.

In order to solve the metal debris problem, the conventional technique provides for the use of various magnets in the ditch for intercepting the flow of fluid through the ditch and capturing as many metal objects as possible. However, the collection magnets are difficult to retain in the viscous fluid flow, and the metal collected on the magnets is difficult to remove. US 2 792 115 A discloses a magnetic separator to be placed in a drilling mud ditch for separating magnetic particles from the drilling mud flowing therein. The separator is made of a supporting base fixedly holding a plurality of permanent magnets and a mounting plate fixedly holding a plurality of non-magnetic tube elements. The tube elements are capable of housing and protecting the permanent magnet when the mounting plate is placed onto the supporting base. US 5 819 949 A relates to an apparatus for separating magnetic material and in particular relates to a specific closure operator member for mounting a bar magnet in a tubular housing. US 2002 144 545 A1, US 2003 183 580 A1 and US 5 043 063 each relate to a magnetic trap for attracting (and thus removing) metallic fragments from a medium, wherein a source of a magnetic field is received in a removable manner in a non-magnetic casing. US 2 912 106 relates to a magnetic separator in which an assembly of V-shaped collection prongs - which prongs are capable of carrying an induced magnetism - is placed in a housing defining a flow area for a fluid. The prongs - when carrying the induced magnetism - are capable of collecting magnetic material contained in the fluid flowing along the prongs through the flow area. The separator also has first and second magnets to be selectively engageable with the housing for inducing magnetism in the prongs.

The present invention contemplates elimination of drawbacks associated with the prior art and provision of a metal debris cleanout system, tool and method that can be used for removal of metal debris from the drill mud and other similar re-circulating fluids.

### SUMMARY OF THE INVENTION

It is, therefore, an object of the present invention to provide a metal debris cleanout system that allows entrapment of metal debris in the circulation fluids before the re-circulated fluids are returned to a well bore.

It is another object of the present invention to provide a metal debris cleanout method for capturing metal debris in the flow of re-circulating flow.

These and other objects of the present invention are achieved through a provision of a system and a method for removing metal debris from a fluid flow as set forth in claims 1 and 18, respectively. The system comprises at least one magnetic unit comprising a hollow sleeve and a removable magnetic core positioned in the sleeve. The magnetic unit is placed in the normal path of the fluid flow, such that the fluid contacts the sleeve and the metal debris settles on the exterior of the sleeve. Once the operator detects sufficient accumulation of the metal particles on the sleeve, the operator removes the magnetic unit from the fluid path and removes the magnetic core. The metal debris falls under gravity from the non-magnetic sleeve and can be collected for disposal. The magnetic unit can then be re-positioned in the fluid flow path for further collection of the metal debris.

### BRIEF DESCRIPTION OF THE DRAWINGS

Reference will now be made to the drawings wherein like parts are designated by like numerals and wherein
Figure 1 is a schematic view illustrating circulation of fluid from and to a well bore.
Figure IA is a schematic detail view of a re-circulated fluid line showing a plurality of fluid deflectors positioned therein.

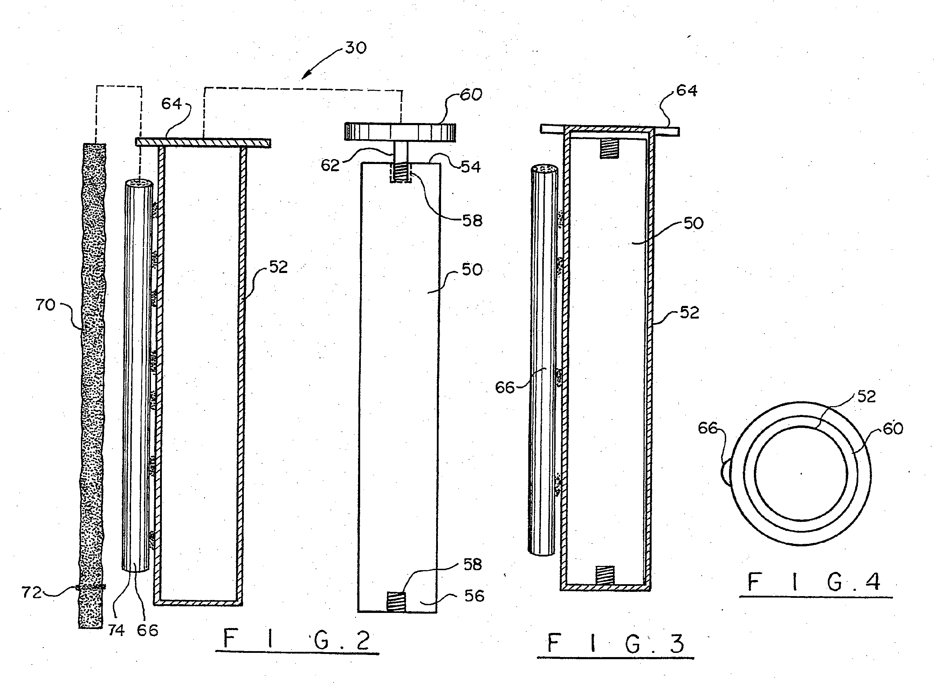

Figure 2 is an exploded view of the cleanout magnetic unit in accordance to the present invention.
Figure 3 is a detail view showing a magnetic core positioned in the non-magnetic sleeve.
Figure 4 is a top view of the hollow sleeve with the magnetic core removed.

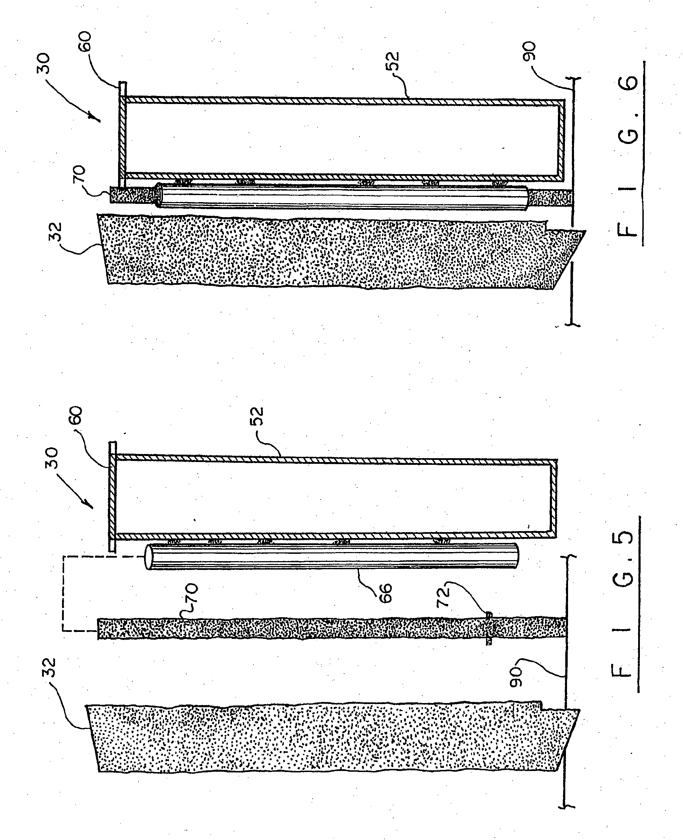

Figure 5 is a detail view illustrating position of a fluid deflector member and a pivot shaft secured to a base plate.
Figure 6 is a side view illustrating the fluid deflector member and the magnetic unit of the present invention, with the handle removed.
Figure 7 is a schematic view illustrating position of the fluid deflector member relative to the magnetic unit such that a trap area is formed therebetween.

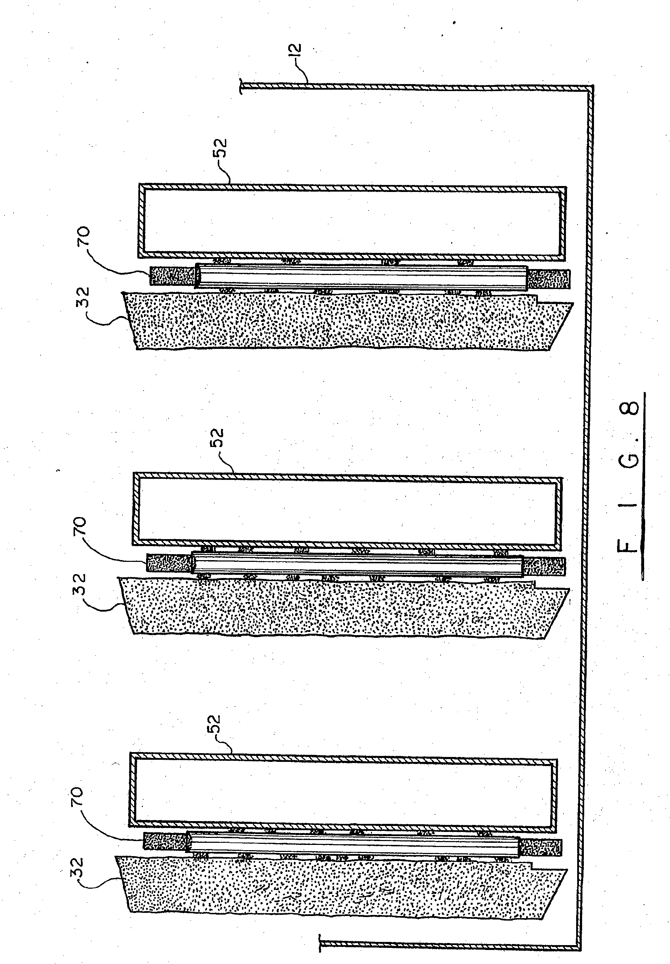

Figure 8 is a schematic side view illustrating position of the plurality of magnetic unit and fluid deflector member in a fluid return ditch.
Figure 9 is a schematic top view illustrating the cleanout system of the present invention utilizing a plurality of magnetic tool units positioned within a fluid return ditch.
Figure 10 is a schematic view illustrating positioning of the magnetic tool units using a different positioning choice of the magnetic units on the base plate.
Figure 11 is a schematic view illustrating still another variation in the magnetic units placement.
Figure 12 is a schematic view illustrating still further variation in the magnetic unit placement in the return ditch.
Figure 13 illustrates a magnetic unit with the metal debris settled on the hollow sleeve.
Figure 14 illustrates easy removal of the metal debris from the hollow sleeve upon removal of the magnetic core.

### DETAILED DESCRIPTION OF THE PREFERRED EMBODIMENT

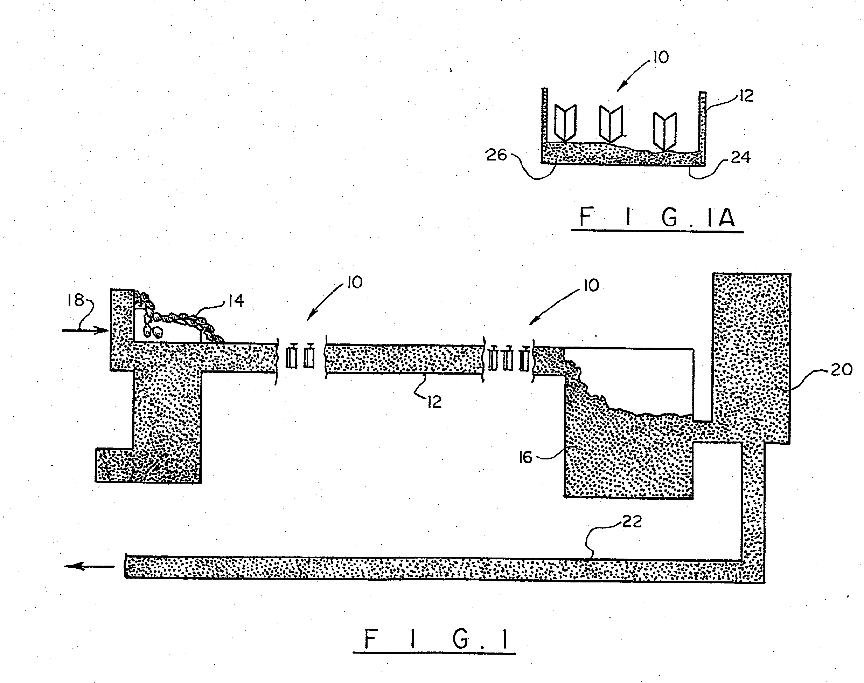

Turning now to the drawings in more detail, numeral 10 designates the metal debris cleanout system in accordance with the present invention. As can be seen in Figure 1, the system 10 can be positioned in one or more locations in a fluid return ditch 12, which extends between a surface cleanout device, for instance, a shale shaker 14 and a circulating fluid collection area, such as a mud pit 16. The circulating fluid, such as the drilling mud, is delivered to the shale shaker via a conduit 18 from a well bore (not shown). The shale shaker 14 typically comprises a screen through which chunks of formation, metal shavings and the like drop by gravity into a container positioned below the screen. The drilling mud or other re-circulated fluid, now free from relatively large pieces of debris, is allowed to flow to the fluid return ditch 12 that is slightly inclined to allow the fluid to flow to the mud pit 16 where heavier debris settles on the bottom, while lighter circulating fluid is pumped by one or more pumps 20 into a return line 22 for delivery to the rig floor (not shown). The cleanout system 10 of the present invention is positioned in the normal path of the fluid flow, such as re- circulating fluid line schematically shown in Figure IA. The re-circulated fluid 24 flows along the bottom 26 of the return ditch 12.

Each system 10 comprises a plurality of magnetic units 30, each provided with a corresponding fluid deflector member 32, which is positioned upstream from the magnetic unit 30. The fluid flow deflector member 32 comprises an upright solid body 34, which has outside dimensions preferably at least slightly greater than outside dimensions of the magnetic unit 30. The deflector member 30 has a generally-V-shaped cross section and is shown comprising a pair of angularly secured portions 36 and 38. The portions 36 and 38 may be connected together at an acute angle, at a right angle, or at an obtuse angle, depending on the particular design selected by the user. The deflector member re-directs the fluid flow and prevents a direct impact of the fluid on the protected magnetic unit 30. The pattern of the fluid flow is shown by arrows31 in the drawings. As a result of positioning the deflector members 32 in the direct path of the fluid flow, the velocity of the flow is reduced and a plurality of turbulent areas are created on the edges of the deflector portions 36 and 38. At the same time, reduced velocity flow areas are created between the downstream sides 40, 42 of the deflector member 32. The deflector 32 redirects fluid movement and also creates an "Eddy" effect. This prevents flushing of the debris caught on the magnetic unit 30 under the strong force of the fluid flow. In addition the fluid deflector 32 creates a plurality of trap areas 44 allowing additional debris to be removed from the flow of the drilling fluid through the ditch 12. The magnetic tools 30 are positioned within the less turbulent zones, partially protected by the deflectors 32.

Each of the magnet assemblies 30 comprises a magnet insert, or core 50 configured for removable positioning within a hollow sleeve 52. The sleeve 52 is formed from a non-magnetic material, for instance, stainless steel, while the magnet insert 50 is made from rare earth materials. The insert 50 comprises an upper end 54 and a lower end 56, each provided with a cutout having interior threads 58. A handle 60 has a stem 62 provided with exterior threads matching the threads 58 on both ends of the insert 50. Should one of the threads 58 become damaged, the orientation of the insert 50 can be reversed, and the handle 60 can be engaged with either end of the magnetic insert 50.

A ring-shaped collar 64 is secured adjacent the top of the sleeve 52. The collar 64 has diameter greater than the exterior of the sleeve 52, the purpose of which will be explained in more detail hereinafter. A pivot sleeve 66 is fixedly attached to the sleeve 52 and extends in a tangential relationship to the exterior surface of the sleeve 52. The pivot sleeve 66 is adapted for mounting over an upright pivot shaft 70. A pivot stop 72 is secured adjacent the lower part of the pivot shaft 70 transversely to a normal axis of the pivot shaft 70. The bottom 74 of the pivot sleeve 66 rests on the pivot stop 72 when the sleeve 66 is engaged with the pivot shaft 70. When mounted on the pivot shaft 70, the hollow sleeve 52, along with the pivot sleeve 66, is allowed to pivot about a vertical axis defined by the shaft 70 in the directions shown by arrows 80 in the drawings. The limited pivotal movement of the sleeve 66 allows the magnetic field created by the magnet insert 50 to span along a greater area within the fluid flow and collect more metal debris. The core 50 and the sleeve 52 are designed to swing with the prevailing drill fluid current, allowing the magnets to adjust to a comfortable position within the fluid flow to maximize the debris collection process.

The pivot shaft 70 arid the fluid deflectors 32 are fixedly secured on a base plate 90 which supports one or more fluid deflectors 32 and one or more pivot shafts 70 thereon. The sleeves 52, 66 and with the magnet inserts 50 can be easily removed from the base plate 90 when necessary during operation of the instant system.

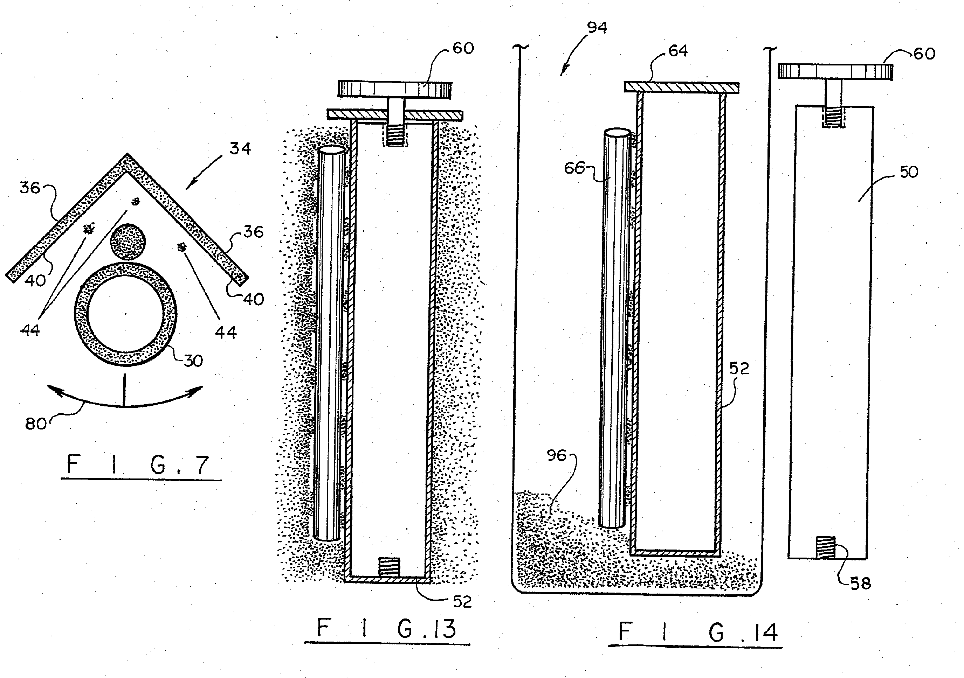

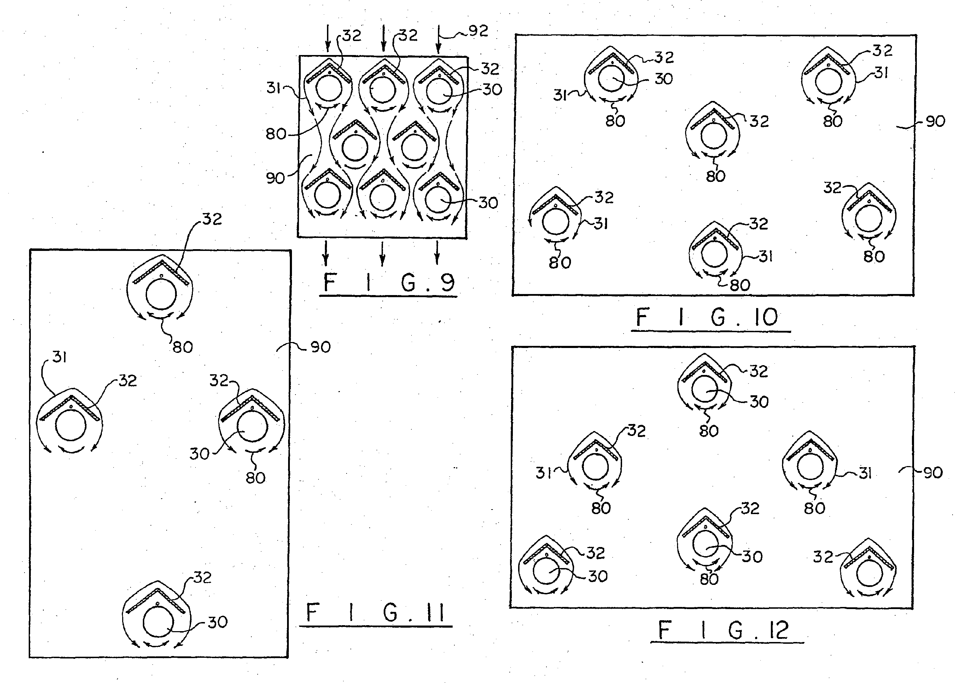

In operation, the user positions the base plate 90 with a cleanout magnetic tool in the normal fluid path of the re-circulated fluid, such as for instance ditch 12. The base plate 90 rests on the bottom with the magnetic units 30 and the deflector members 32 extending upwardly, as shown schematically in Figure 1. The fluid flow is allowed to flow past the magnetic unit, in the direction shown by arrows 92 in Figure 9, moving around the deflector members 32, while the magnetic core attracts the metal debris from the fluid flow and causes it to settle on the exterior of the hollow sleeve 52 and the pivot sleeve 66. The operator monitors the accumulation of metal particles and, once it is determined that the amount of metal debris attracted is approaching a critical limit, the operator slides the pivot sleeve 66 from the pivot shaft 70 and removes the sleeves 52, 66, along with the magnetic core 50 from the base plate 90. The unit 30 is then positioned in a container schematically designated by numeral 94 in Figure 14, which is large enough to accommodate the unit 30. The operator then removes the core 50 by lifting it by the handle 60. Once the magnetic core 52 is removed, the magnetic field ceases to act on the metal debris 96 and it falls under gravity to the bottom of the container 94. The ring collar 64 prevents the debris 96 from following the movement of the magnetic field generated by the insert 50 and stops the metal debris 96 from moving beyond the limits defined by the ring 64. Once the sleeves 52 and 66 are free from the debris, the sleeves 52, 66 are lifted from the container 94, the magnetic insert 50 is reinserted into the sleeve 52 and the unit is ready for positioning on the pivot shaft 70 again. The debris 96 can be recovered in the container and analyzed at the operator's convenience or disposed of in an environmentally safe manner.

The present invention provides an efficient and easy to operate metal debris removal system and method. In comparison with conventional methods of metal debris removal, which is time consuming and labor intensive, the removable magnet insert allows to safely and easily remove the accumulated metal from the outside of the sleeve and immediately reuse the unit without the need for complex cleanup by pressure washing, scraping and other such means that are currently used in the industry.

Many changes and modifications can be made in the design of the present invention without departing from the scope of the appended claims.

## Claims

1. A cleanout system (10) for removal of metal debris from a fluid flow, the system (10) comprising:
at least one magnetic unit (30) configured for positioning in a path of the fluid, said at least one magnetic unit (30) comprising a non-magnetic hollow sleeve (52) and a removable magnetic core (50) configured for positioning in said sleeve (52), an exterior surface of said sleeve (52) forming a metal debris settling area; and
at least one fluid deflector member (32) positioned upstream of said at least one magnetic unit (30), said fluid deflector member (32) modifying the fluid flow adjacent said at least one magnetic unit (30) to prevent a direct impact of the fluid on said at least one magnetic unit (30), said at least one fluid deflector member (32) being positioned a distance from said at least one magnetic unit (30), such that a trap area (44) for metal debris is created between said least one fluid deflector member (32) and said at least one magnetic unit (30).

2. The system (10) of Claim 1, wherein said at least one fluid deflector member (32) comprises a solid body (34) extending transversely to a normal fluid flow.

3. The system (10) of Claim 2, wherein said solid body (34) has a generally V-shaped cross-section, said body (34) having cross-sectional dimensions at least slightly greater than cross sections dimensions of said at least one magnetic unit (30).

4. The system (10) of Claim 1, wherein said at least one magnetic unit (30) is adapted for pivotal movement about a vertical axis.

5. The system (10) of Claim 1, wherein said at least one magnetic unit (30) further comprises an upright shaft (70) and a pivot sleeve (66) detachably pivotally mountable on said shaft (70), said pivot sleeve (66) being attached to said hollow sleeve (52).

6. The system (10) of Claim 5, further comprising a base plate (90), and where said fluid deflector member (32) and said upright shaft (70) are secured on said base (90).

7. The system (10) of Claim 6, wherein said upright shaft (70) carries a transverse pivot sleeve stop (72) to allow a bottom of said pivot sleeve (66) to rest on said stop above said base plate (90).

8. The system (10) of Claim 1, wherein said magnetic core (50) comprises a handle (60) detachably secured to an end of said magnetic core (50) to facilitate removal of said magnetic core (50) from said hollow sleeve (52) upon demand.

9. The system (10) of Claim 1, wherein said hollow sleeve (52) is provided with a means (64) for preventing an upward movement of the metal debris settled on said hollow sleeve (52) when said magnetic core (50) is removed from said hollow sleeve (52).

10. The system (10) of Claim 9, wherein said means (64) for preventing the upward movement of the metal debris comprises a ring-shaped member (64) secured at an upper end of the hollow sleeve (52), outside dimensions of said ring-shaped member (64) being at least slightly greater than outside dimensions of said hollow sleeve (52).

11. The system (10) of Claim 1, wherein said magnetic core (50) is provided with an internally threaded cutout at each end thereof.

12. The system (10) of Claim 11, wherein said magnetic core (50) is provided with a detachable handle (60) configured for threadable engagement with a selected end of the magnetic core (50).

13. The system (10) of claim 1, the system being adapted for removal of metal debris from a well bore re-circulating fluid, the system (10) comprising:
a base plate (90);
a plurality of said magnetic units (30); and
a fluid deflector member (32) positioned upstream of each of said magnetic units (30).

14. The system (10) of Claim 13, wherein each of said fluid deflector members (32) comprises a generally V-shaped solid body (34) extending transversely to a normal fluid flow of the re-circulating fluid.

15. The system (10) of Claim 13, wherein each of said magnetic units (30) further comprises an upright shaft (70) and a pivot sleeve (66) detachably pivotally mountable on said shaft (70), said pivot sleeve (66) being attached to said hollow sleeve (52), and said upright shaft (70) being fixedly secured on said base plate (90).

16. The system (10) of Claim 13, wherein each hollow sleeve (52) carries an enlarged diameter ring-shaped member (64) secured at an upper end thereof, said ring-shaped member (64) preventing an upward movement of the metal debris settled on the hollow sleeve (52) when the magnetic core (50) is being removed from said hollow sleeve (52).

17. The system (10) of Claim 13, wherein each magnetic core (50) is provided with a handle (64) detachably engageable with an end of the magnetic core (50) to facilitate removal of each magnetic core (50) from its respective hollow sleeve (52).

18. A method of removing metal debris from a fluid flow, the method comprising the following steps:
providing at least one magnetic unit (30) comprising a non-magnetic hollow sleeve (52) and a magnetic core (50) removably positionable in said hollow sleeve (52);
providing at least one fluid deflector member (32)
positioning said at least one magnetic unit (30) in a normal path of the fluid flow downstream of said fluid at least one fluid deflector member (32), such that the fluid deflector member (32) modifies a fluid flow adjacent said at least one magnetic unit (30) to prevent a direct impact of the fluid flow on said at least one magnetic unit (30), and such that said at least one fluid deflector member (32) is positioned a distance from said at least one magnetic unit (30), to create a trap area (44) for metal debris between said least one fluid deflector member (32) and said at least one magnetic unit (30);
allowing the fluid to contact the hollow sleeve (52) and settle on the exterior of the hollow sleeve (52) under the magnetic force generated by said magnetic core (50);
removing said at least one magnetic unit (30) from the path of the fluid flow upon detecting accumulation of the metal debris on the hollow sleeve (52); and
removing the magnetic core (50) from the hollow sleeve (52) and allowing the metal debris to fall under gravity from the exterior of said hollow sleeve (52).

19. The method of Claim 18, further comprising the steps of providing a pivot shaft (70) and a pivot sleeve (66) attached to said hollow sleeve (66), and positioning the pivot sleeve (66) on said pivot shaft (70), thereby facilitating pivotal movement of said at least one magnetic unit (30) in the path of the fluid flow.

20. The method of Claim 18, wherein said magnetic core (50) is provided with a handle (60) secured to one of its ends, said handle (60) facilitating removal of said magnetic core (50) from said hollow sleeve (52).

21. The method of Claim 18, further comprising the step of providing a ring-shaped member (64) secured at an upper end of the hollow sleeve (52), said ring-shaped member (64) preventing an upward movement of the metal debris when the magnetic core (50) is being removed from the hollow sleeve (52).

## Patentansprüche

1. Reinigungssystem (10) zur Entfernung von Metallabrieb aus einem Strömungsmittelfluss, wobei das System (10) folgendes aufweist:
zumindest eine Magneteinheit (30), die zur Positionierung in einem Pfad des Strömungsmittels konfiguriert ist, wobei die mindestens eine Magneteinheit (30) eine nicht-magnetische hohle Hülse (52) und einen entfernbaren magnetischen Kern (50) aufweist, der zur Positionierung in der Hülse (52) konfiguriert ist, wobei eine Außenfläche der Hülse (52) einen Metallabriebsablagerungsbereich bildet; und
zumindest ein Strömungsmittelablenkglied (32), welches stromaufwärts der mindestens einen Magneteinheit (30) positioniert ist, wobei das Strömungsmittelablenkglied den Strömungsmittelfluss benachbart zu der mindestens einen Magneteinheit (30) modifiziert, um ein direktes Auftreffen des Strömungsmittels auf die mindestens eine Magneteinheit (30) zu verhindern, wobei das mindestens eine Strömungsmittelablenkglied (32) in einer Entfernung von der mindestens einen Magneteinheit (30) positioniert ist, so dass ein Auffangbereich (44) für Metallabrieb zwischen dem mindestens einen Strömungsmittelablenkglied (32) und der mindestens einen Magneteinheit (30) erzeugt wird.

2. System (10) nach Anspruch 1, wobei das mindestens eine Strömungsmittelablenkglied (32) einen festen Körper (34) aufweist, der sich quer zu einem normalen Strömungsmittelfluss erstreckt.

3. System (10) nach Anspruch 2, wobei der feste Körper (34) einen Allgemeinen V-förmigen Querschnitt hat, wobei der Körper (34) Querschnittsabmessungen hat, die geringfügig größer sind, als Querschnittsabmessungen der mindestens einen Magneteinheit (30).

4. System (10) nach Anspruch 1, wobei die mindestens eine Magneteinheit (30) zur Schwenkbewegung um eine vertikale Achse geeignet ist.

5. System (10) nach Anspruch 1, wobei die mindestens eine Magneteinheit (30) weiter eine aufrechte Welle (70) und eine Schwenkhülse (66) aufweist, die entfernbar, schwenkbar an der Welle (70) montierbar ist, wobei die Schwenkhülse (66) an der hohlen Hülse (52) angebracht ist.

6. System (10) nach Anspruch 5, welches weiter eine Basisplatte (90) aufweist und wobei das Strömungsmittelablenkglied (32) und die aufrechte Welle (70) an der Basis (90) befestigt sind.

7. System (10) nach Anspruch 6, wobei die aufrechte Welle (70) einen querverlaufenden Schwenkhülsenanschlag (72) trägt, um zu gestatten, dass ein Unterteil der Schwenkhülse (66) auf dem Anschlag über der Basisplatte (90) ruht.

8. System (10) nach Anspruch 1, wobei der magnetische Kern (50) einen Handgriff (60) aufweist, der entfernbar an einem Ende des magnetischen Kerns (50) befestigt ist, um eine Entfernung des magnetischen Kerns (50) aus der hohlen Hülse (52) zu ermöglichen, falls erforderlich.

9. System (10) nach Anspruch 1, wobei die hohle Hülse (52) mit Mitteln (64) zum Verhindern einer Aufwärtsbewegung des Metallabriebs versehen ist, welcher an der hohlen Hülse (52) abgelagert ist, wenn der magnetische Kern (50) aus der hohlen Hülse (52) entfernt wird.

10. System (10) nach Anspruch 9, wobei die Mittel (64) zum Verhindern der Aufwärtsbewegung des Metallabriebs ein ringförmiges Glied (64) aufweisen, welches an einem oberen Ende der hohlen Hülse (52) befestigt ist, wobei die Außenabmessungen des ringförmigen Gliedes (64) zumindest geringfügig größer sind, als die Außenabmessungen der hohlen Hülse (52).

11. System (10) nach Anspruch 1, wobei der magnetische Kern (50) mit einem mit Innengewinde versehenen Ausschnitt an jedem Ende davon versehen ist.

12. System (10) nach Anspruch 11, wobei der magnetische Kern (50) mit einem entfernbaren Handgriff (60) versehen ist, der zum Schraubeingriff mit einem ausgewählten Ende des magnetischen Kerns (50) konfiguriert ist.

13. System (10) nach Anspruch 1, wobei das System zur Entfernung von Metallabrieb aus einem Bohrlochrückzirkulations- bzw. Bohrlochspülströmungsmittel geeignet ist, wobei das System (10) folgendes aufweist:
eine Basisplatte (90);
eine Vielzahl von Magneteinheiten (30); und
ein Strömungsmittelablenkglied (32), welches stromaufwärts von jeder der Magneteinheiten (30) positioniert ist.

14. System (10) nach Anspruch 13, wobei jedes der Strömungsmittelablenkglieder (32) einen im Allgemeinen V-förmigen festen Körper (34) aufweist, der sich quer zu einem normalen Strömungsmittelfluss des Rückzirkulations- bzw. Spülströmungsmittels erstreckt.

15. System (10) nach Anspruch 13, wobei jede der Magneteinheiten (30) weiter eine aufrechte Welle (70) und eine Schwenkhülse (66) aufweist, die entfernbar, schwenkbar an der Welle (70) befestigt werden kann, wobei die Schwenkhülse (66) an der hohlen Hülse (52) befestigt ist, und wobei die aufrechte Welle (70) fest an der Basisplatte (90) befestigt ist.

16. System (10) nach Anspruch 13, wobei jede hohle Hülse (52) ein ringförmiges Glied (64) mit vergrößertem Durchmesser aufweist, welches an einem oberen Ende davon befestigt ist, wobei das ringförmige Glied (64) eine Aufwärtsbewegung des Metallabriebs verhindert, der an der hohlen Hülse (52) abgelagert ist, wenn der magnetische Kern (50) von der hohlen Hülse (52) entfernt wird.

17. System (10) nach Anspruch 13, wobei der magnetische Kern (50) mit einem Handgriff (64) versehen ist, der entfernbar mit einem Ende des magnetischen Kerns (50) in Eingriff kommen kann, um eine Entfernung von jedem magnetischen Kern (50) aus seiner jeweiligen hohlen Hülse (52) zu ermöglichen.

18. Verfahren zum Entfernen von Metallabrieb aus einem Strömungsmittelfluss, wobei das Verfahren folgende Schritte aufweist:
Vorsehen von mindestens einer Magneteinheit (30), die eine nichtmagnetische hohle Hülse (52) und einen magnetischen Kern (50) aufweist, der entfernbar in der hohlen Hülse (52) positionierbar ist,
Vorsehen von mindestens einem Strömungsmittelablenkglied (32); Positionieren, der mindestens einen Magneteinheit (30) in einem normalen Pfad des Strömungsmittelflusses stromabwärts des Strömungsmittels an mindestens einen Strömungsmittelablenkglied (32), so dass das Strömungsmittelablenkglied (32) einen Strömungsmittelfluss benachbart zu der mindestens einen Magneteinheit (30) modifiziert, um ein direktes Auftreffen des Strömungsmittelflusses auf die mindestens eine Magneteinheit (30) zu verhindern, und so dass das mindestens eine Strömungsmittelablenkglied (32) in einer Entfernung von der mindestens einen Magneteinheit (30) positioniert ist, um einen Auffangbereich (44) für Metallabrieb zwischen dem mindestens einen Strömungsmittelablenkglied (32) und der mindestens einen Magneteinheit (30) zu erzeugen;
Gestatten, dass das Strömungsmittel die hohle Hülse (52) berührt und sich am äußeren der hohlen Hülse (52) unter Einwirkung der Magnetkraft absetzt, die von dem magnetischen Kern (50) erzeugt wird;
Entfernen der mindestens einen Magneteinheit (30) aus dem Pfad des Strömungsmittelflusses auf das Detektieren einer Ansammlung des Metallabriebs an der hohlen Hülse (52) hin; und
Entfernen des magnetischen Kerns (50) aus der hohlen Hülse (52) und Gestatten, dass der Metallabrieb unter Schwerkrafteinwirkung vom äußeren der hohlen Hülse (52) abfällt.

19. Verfahren nach Anspruch 18, welches weiter die Schritte aufweist, eine Schwenkwelle (70) und eine Schwenkhülse (66) vorzusehen, die an der hohlen Hülse (66) angebracht ist, und die Schwenkhülse (66) an der Schwenkhülse (70) zu positionieren, wodurch eine Schwenkbewegung der mindestens einen Magneteinheit (30) in den Pfad des Strömungsmittelflusses gestattet wird.

20. Verfahren nach Anspruch 18, wobei der magnetische Kern (50) mit einem Handgriff (60) versehen ist, der an seinen Enden befestigt ist, wobei der Handgriff (60) die Entfernung des magnetischen Kerns (50) aus der hohlen Hülse (52) ermöglicht.

21. Verfahren nach Anspruch 18, welches weiter den Schritt aufweist, ein ringförmiges Glied (64) vorzusehen, welches an einem oberen Ende der hohlen Hülse (52) befestigt ist, wobei das ringförmige Glied (64) einer Aufwärtsbewegung des Metallabriebs verhindert, wenn der magnetische Kern (50) aus der hohlen Hülse (52) entfernt wird.

## Revendications

1. Système de nettoyage (10) pour retirer des débris métalliques d'un flux de fluide, le système (10) comprenant :
au moins une unité magnétique (30) agencée pour être positionnée sur le chemin du fluide, ladite au moins une unité magnétique (30) comprenant un manchon creux non magnétique (52) et une âme magnétique amovible (50) agencée pour être positionnée dans le manchon (52), une surface extérieure du manchon (52) formant une région de décantation de débris métalliques ; et
au moins un élément déflecteur de fluide (32) positionné en amont de ladite au moins une unité magnétique (30), l'élément déflecteur de fluide (32) modifiant le flux de fluide adjacent à ladite au moins une unité magnétique (30) pour empêcher un impact direct du fluide sur ladite au moins une unité magnétique (30), ledit au moins un élément déflecteur de fluide (32) étant positionné à une certaine distance de ladite au moins une unité magnétique (30), de telle sorte qu'une région de piège (44) pour des débris métalliques est créée entre ledit au moins un élément déflecteur de fluide (32) et ladite au moins une unité magnétique (30).

2. Système (10) selon la revendication 1, dans lequel ledit au moins un élément déflecteur de fluide (32) comprend un corps solide (34) s'étendant transversalement par rapport à un flux de fluide normal.

3. Système (10) selon la revendication 2, dans lequel le corps solide (34) a une section en forme générale de V, le corps (34) ayant des dimensions de section au moins légèrement supérieures aux dimensions de section de ladite au moins une unité magnétique (30).

4. Système (10) selon la revendication 1, dans lequel ladite au moins une unité magnétique (30) est adaptée à un mouvement pivotant autour d'un axe vertical.

5. Système (10) selon la revendication 1, dans lequel ladite au moins une unité magnétique (30) comprend en outre un arbre se tenant dressé (70) et un manchon pivotant (66) monté de façon pivotante et amovible sur l'arbre (70), le manchon pivotant (66) étant fixé au manchon creux (52).

6. Système (10) selon la revendication 5, comprenant en outre une plaque de base (90), et dans lequel l'élément déflecteur de fluide (32) et l'arbre dressé (70) sont fixés sur la base (90).

7. Système (10) selon la revendication 6, dans lequel l'arbre dressé (70) porte une butée transversale de manchon pivotant (72) pour permettre au bas du manchon pivotant (66) de reposer sur la butée au-dessus de la plaque de base (90).

8. Système (10) selon la revendication 1, dans lequel l'âme magnétique (50) comprend une poignée (60) fixée de façon amovible à une extrémité de l'âme magnétique (50) pour faciliter le retrait de l'âme magnétique (50) du manchon creux (52) sur demande.

9. Système (10) selon la revendication 1, dans lequel le manchon creux (52) est muni de moyens (64) pour empêcher un mouvement vers le haut des débris métalliques déposés sur le manchon creux (52) lorsque l'âme magnétique (50) est retirée du manchon creux (52).

10. Système (10) selon la revendication 9, dans lequel les moyens (64) pour empêcher le mouvement vers le haut des débris métalliques comprennent un élément en forme de bague (64), fixé à une extrémité supérieure du manchon creux (52), les dimensions extérieures de l'élément en forme de bague (64) étant au moins légèrement supérieures aux dimensions extérieures du manchon creux (52).

11. Système (10) selon la revendication 1, dans lequel l'âme magnétique (50) est munie d'une découpe filetée intérieure au niveau de chacune de ses extrémités.

12. Système (10) selon la revendication 11, dans lequel l'âme magnétique (50) est munie d'une poignée amovible (60) agencée pour se mettre en prise filetée avec une extrémité sélectionnée de l'âme magnétique (50).

13. Système (10) selon la revendication 1, le système étant adapté à retirer des débris métalliques à partir d'un orifice de recyclage de fluide, le système (10) comprenant :
une plaque de base (90) ;
une pluralité desdites unités magnétiques (30) ; et
un élément déflecteur de fluide (32) positionné en amont de chacune des unités magnétiques (30).

14. Système (10) selon la revendication 13, dans lequel chacun des éléments déflecteurs de fluide (32) comprend un corps solide en forme générale de V (34) s'étendant transversalement par rapport à un flux de fluide normal du fluide de recyclage.

15. Système (10) selon la revendication 13, dans lequel chacune des unités magnétiques (30) comprend en outre un arbre dressé (70) et un manchon pivotant (66) pouvant se monter de façon pivotante et amovible sur l'arbre (70), le manchon pivotant (66) étant fixé au manchon creux (52), et l'arbre dressé (70) étant fixé fermement sur la plaque de base (70).

16. Système (10) selon la revendication 13, dans lequel chaque manchon creux (52) porte un élément en forme de bague (64) d'un diamètre agrandi, fixé au niveau d'une extrémité supérieure, l'élément en forme de bague (64) empêchant un mouvement vers le haut des débris métalliques déposés sur le manchon creux (52) lorsque l'âme magnétique (50) est retirée du manchon creux (52).

17. Système (10) selon la revendication 13, dans lequel chaque âme magnétique (50) est munie d'une poignée (64) pouvant se mettre en prise de façon amovible avec une extrémité de l'âme magnétique (50) pour faciliter le retrait de chaque âme magnétique (50) de son manchon creux (52) respectif.

18. Procédé pour retirer des débris métalliques d'un flux de fluide, le procédé comprenant les étapes suivantes :
prévoir au moins une unité magnétique (30) comprenant un manchon creux non magnétique (52) et une âme magnétique (50) positionnable de façon amovible dans le manchon creux (52) ;
prévoir au moins un élément déflecteur de fluide (32) ;
positionner ladite au moins une unité magnétique (30) dans un chemin normal du flux de fluide en aval dudit au moins un élément déflecteur de fluide (32), de sorte que l'élément déflecteur de fluide (32) modifie un flux de fluide adjacent à ladite au moins une unité magnétique (30) pour empêcher un impact direct du flux de fluide sur ladite au moins une unité magnétique (30), et de sorte que ledit au moins un élément déflecteur de fluide (32) est positionné à distance de ladite au moins une unité magnétique (30), pour créer une région de piège (44) pour des débris métalliques entre ledit au moins un élément déflecteur de fluide (32) et ladite au moins une unité magnétique (30) ;
laisser le fluide contacter le manchon creux (52) et se décanter sur l'extérieur du manchon creux (52) sous l'effet de la force magnétique générée par l'âme magnétique (50) ;
retirer ladite au moins une unité magnétique (30) du chemin du flux de fluide lorsqu'une accumulation de débris métalliques est détectée sur le manchon creux (52) ; et
retirer l'âme magnétique (50) du manchon creux (52) et laisser les débris métalliques tomber par gravité à partir de l'extérieur du manchon creux (52).

19. Procédé selon la revendication 18, comprenant en outre les étapes consistant à prévoir un arbre pivot (70) et un manchon pivotant (66) fixé au manchon creux (66), et positionner le manchon pivotant (66) sur l'arbre pivot (70), facilitant par cela le mouvement pivotant de ladite au moins une unité magnétique (30) dans le chemin du flux de fluide.

20. Procédé selon la revendication 18, dans lequel l'âme magnétique (50) est munie d'une poignée (60) fixée à l'une de ses extrémités, la poignée (60) facilitant le retrait de l'âme magnétique (50) du manchon creux (52).

21. Procédé selon la revendication 18, comprenant en outre l'étape consistant à prévoir un élément en forme de bague (64) fixé à une extrémité supérieure du manchon creux (52), l'élément en forme de bague (64) empêchant un mouvement vers le haut des débris métalliques lorsque l'âme magnétique (50) est retirée du manchon creux (52).
